# EUROPÄISCHE PATENTSCHRIFT

(11) **EP 0 594 029 B1**
(45) Veröffentlichungstag und Bekanntmachung des Hinweises auf die Patenterteilung: **20.11.1996**
(21) Anmeldenummer: 93116438.8
(22) Anmeldetag: 11.10.1993
(51) Int. Cl.: A43B 7/12, A43B 9/16

(54) **Wasserdichte Fussbekleidung**
Waterproof footwear
Chaussure imperméable

(30) Priorität: 17.10.1992 DE 4235096
(43) Veröffentlichungstag der Anmeldung: 27.04.1994
(73) Patentinhaber: Akzo Nobel N.V., 6824 BM Arnhem (NL)
(72) Erfinder: Mähler, Rolf-Dirk, c/o Century Enka Ltd., Pune 411.001 (IN)
(74) Vertreter: Fett, Günter

(56) Entgegenhaltungen:
- EP-A- 0 544 270
- WO-A-90/06067
- DE-U- 8 717 201
- FR-A- 2 576 195

## Beschreibung

Die Erfindung betrifft eine wasserdichte Fußbekleidung aufweisend eine Innensohle, eine angespritzte (angeschäumte) feste biegsame Laufsohle mit einer Aufkantung sowie einen oben offenen Schaft, der mit einer wasserdichten, jedoch wasserdampfdurchlässigen Schicht gefüttert ist.

Unter Fußbekleidung wird hier ein Schuh, Stiefel u.dgl. verstanden. Der Schaft kann wie bei einem Stiefel rundherum geschlossen sein, mit einem Reißverschluß, einem Klettbandverschluß, Haken und Ösen, Agraffen, Knöpfen usw. oder wie bei einem Schnürschuh mit Schnürsenkeln verschließbar sein usw.

Wasserdichte Fußbekleidungen mit angespritzter (angeschäumter) Laufsohle sind handelsüblich und daher insoweit bekannt.

Bekannt sind auch Folien, Membranen, daraus hergestellte Laminate usw. zur Herstellung wasserdichter, jedoch wasserdampfdurchlässiger Bekleidungsstücke ganz allgemein, wobei sie als Innenfutter, Zwischenfutter oder auch als Obermaterial eingesetzt werden können. Unter wasserdichter, jedoch wasserdampfdurchlässiger Schicht wird hier also auch ein mehrschichtiges Flächengebilde, ein Laminat usw. verstanden. Zur Vereinfachung wird die wasserdichte, jedoch wasserdampfdurchlässige Schicht nachfolgend häufig nur noch als "wasserdichte Schicht" bezeichnet. Auch die Bezeichnung "wasserdichte Fußbekleidung" bedeutet: Wasserdichte, jedoch wasserdampfdurchlässige Fußbekleidung.

Wasserdichte Schichten zur Herstellung wasserdichter, jedoch wasserdampfdurchlässiger Kleidungsstücke, Fußbekleidungen und anderer Gegenstände sind ebenfalls hinreichend bekannt. Eine sehr bekannte und auch für die erfindungsgemäße wasserdichte Fußbekleidung ganz besonders geeignete wasserdichte Schicht ist SYMPATEX ^{R}.

Bei der Herstellung wasserdichter Fußbekleidungen mit angespritzter (angeschäumter) Laufsohle besteht folgendes Problem: Um eine hohe Flexibilität der Laufsohle zu erzielen, was insbesondere bei Kinderschuhen und -stiefeln erwünscht ist, wird zumindest teilweise ohne den sonst üblichen Zwickeinschlag, der mit der Brandsohle verklebt wird, gearbeitet. Dies bringt zudem Kostenvorteile. Man hat daher zunächst den unteren Randbereich des Schaftes, den unteren Randbereich der wasserdichten Schicht und den äußeren Randbereich der Innensohle miteinander vernäht und anschließend die Laufsohle angespritzt (angeschäumt). Bei dieser Vorgehensweise erfolgt jedoch keine zuverlässige wasserdichte Einbettung des Nahtmaterials zwischen dem Schaft (Obermaterial) und der wasserdichten Schicht (Futter), so daß Wasser, welches zwischen den Schaft und die wasserdichte Schicht eingedrungen ist, über das Nahtmaterial in das Innere, also den Fußbereich, der Fußbekleidung eindringen kann, da das Nahtmaterial durch seine Dochtwirkung bzw. die Nadeleinstichstellen durch Kapillarwirkung Wasserbrücken darstellen. Es hat daher nicht an Versuchen gefehlt, eine brauchbare Lösung dieses Problems zu finden, was teilweise auch gelungen ist, jedoch auf Kosten anderer Funktionseigenschaften und/oder der zunächst erreichten Kostenvorteile bei der Herstellung.

In der DE-U-87 17 201 wird ein wasserdichtes Schuhwerk beschrieben, welches eine Innensohle, eine angespritzte bzw. angesäumte feste biegsame Laufsohle mit einer Aufkantung sowie einen oben offenen Schaft aufweist, der mit einer wasserdichten, jedoch wasserdampfdurchlässigen Schicht gefüttert ist, wobei der untere Randbereich des Schaftes mit dem unteren Randbereich der Schicht und dem äußeren Randbereich der Innensohle über ein Verbindungsmaterial verbunden ist, wobei der untere Randbereich des Schaftes mit dem oberen Rand des Verbindungsmaterials vernäht ist und der untere Randbereich der Schicht und der äußere Randbereich der Innensohle mit dem unteren Rand vernäht sind, und der mittlere Bereich und der untere Rand des Verbindungsmaterials in dem die Laufsohle bildenden Material eingebettet sind und dieses Material in diesem Einbettungsbereich mit der Schicht durch das Anspritzen bzw. Anschäumen wasserdicht verbunden ist.

Bei einer wasserdichten Fußbekleidung mit angespritzter (angeschäumter) Laufsohle und bei deren Herstellung müssen nämlich folgende Bedingungen erfüllt werden:
- Vor dem Anspritzen (Anschäumen) der Laufsohle muß die vorgefertigte Fußbekleidung bestehend aus mindestens dem Schaft, der wasserdichten Schicht und der Innensohle eine im wesentlichen stabile handhabbare Einheit bilden, insbesondere darf es nicht zu einer Verschiebung der genannten Teile zueinander kommen, und zwar weder in Längsrichtung oder Querrichtung noch in Höhenrichtung der Fußbekleidung, da eine solche Verschiebung durch das anschließende Anspritzen (Anschäumen) der Laufsohle irreversibel fixiert und somit zu einer deformierten nicht maßgenauen Fußbekleidung führen würde.
- Die Wasserdichtheit im kritischen Bereich der unteren Naht bzw. Nähte muß mit Sicherheit gewährleistet sein und muß allein durch das Anspritzen (Anschäumen) der Laufsohle, also nicht durch vorheriges Versiegeln, Verkleben o.dgl., erreicht werden.
- Die einmal erzielte Wasserdichtheit muß auch während des Gebrauchs der Fußbekleidung erhalten bleiben.
- Ein Herauslösen des unteren Randbereichs des Schaftes aus der Aufkantung der Laufsohle während des Gebrauchs der Fußbekleidung darf nicht stattfinden.

Diese Aufgabe wird durch eine Fußbekleidung gemäß Anspruch 1 gelöst.

Durch die über das obere Band, die Stege und das untere Band erfolgende nur mittelbare Verbindung des unteren Randbereichs des Schaftes mit dem unteren Randbereich der wasserdichten Schicht und dem äußeren Randbereich der Innensohle wird in vorteilhafter Weise erreicht, daß die untere Naht, also die kritische Naht, die zu einer Perforierung der wasserdichten Schicht in diesem Bereich und damit zu einer Verbindung in das Innere der Fußbekleidung führt, beim Anspritzen (Anschäumen) der Laufsohle mit Sicherheit vollständig und somit wasserdicht in dem die Laufsohle bildenden Material eingebettet wird. Dieses Material, beispielsweise ein Kunststoff, ein Natur- oder Kunstkautschuk o.dgl., ist nämlich zunächst fließfähig und kann somit - in Fließrichtung betrachtet - von außen nach innen an den Stegen vorbei bis zur wasserdichten Schicht und von dort nach unten, aber auch von unten nach oben fließen und in das untere Band eindringen und dieses völlig durchdringen. Hierdurch wird auch das durch das untere Band geführte Nahtmaterial völlig und somit wasserdicht eingebettet und werden die Nadeleinstichlöcher wasserdicht abgedichtet.

Dadurch, daß das obere und das untere Band sowie die Stege eine im wesentlichen verschiebefeste Einheit bilden, was dadurch erreicht wird, daß die Stege biegesteif ausgebildet und mit den Bändern im wesentlichen fest verbunden sind, und somit als Abstandshalter wirken, erhält man eine stabile, während der Weiterverarbeitung handhabbare Einheit bestehend aus dem Schaft, der wasserdichten Schicht, der Innensohle sowie den Bändern und Stegen selbst. Die aus den beiden Bändern und den Stegen gebildete Einheit ist also flach und streifenförmig ausgebildet und somit, beispielsweise wie ein Filmstreifen, biegsam (flexibel) und ohne weiteres aufrollbar. Durch die im wesentlichen biegesteifen Stege wird jedoch die für die Verarbeitung erforderliche Querstabilität erreicht, so daß die Einheit u.a. als Abstandshalter wirkt.

Durch die ausreichende Zugfestigkeit der Stege und die ausreichend zugfeste Verbindung zwischen den Stegen und den Bändern, die als selbstverständlsich vorausgesetzt wird, wird mit Sicherheit auch nach längerem Gebrauch der Fußbekleidung ein Herauslösen des unteren Randbereichs des Schaftes aus der Aufkantung der Laufsohle verhindert. Die aus den Bändern und den Stegen gebildete streifenförmige Einheit wirkt somit in hervorragender Weise während der Herstellung der Fußbekleidung, insbesondere vor dem und während des Anspritzens der Laufsohle als ausreichend steifes Haltemittel und Abstandshalter zwischen dem Schaft und der Innensohle und anschließend, also in der gebrauchsfertigen Fußbekleidung, als zugfeste Armierung.

Je nach Ausgestaltung der Fußbekleidung und den damit verbundenen ggf. unterschiedlichen Anforderungen können das obere und das untere Band unterschiedlich ausgestaltet sein. Dies ist ein wesentlicher Aspekt der Erfindung, da es hierdurch möglich wird, die drei Elemente, die die im wesentlichen verschiebungsfeste Einheit bildenden, jedes für sich, d.h. unabhängig voneinander, den bei der Herstellung und dem Gebrauch der Fußbekleidung ggf. völlig unterschiedlichen Anforderungen anzupassen und auf diese Weise durch einfache Versuche zu einer Optimierung dieses - wie oben bereits ausführlich dargelegt - kritischen Bereiches der wasserdichten Fußbekleidung zu gelangen.

Der durch die Stege gebildete mittlere Bereich dieser streifenförmigen Einheit weist überdies eine wesentlich geringere Materialdichte auf als das obere und das untere Band, was sich insbesondere bei der Verarbeitung als sehr vorteilhaft erwiesen hat. So führt diese streifenförmige Einheit auch bei der Verarbeitung auf kleinen Radien, wie beispielsweise bei der Herstellung von Kinderschuhen, zu allenfalls geringer, in der Regel jedoch zu keiner Faltenbildung.

Um zu erreichen, daß die beiden Bänder, zumindest aber das untere Band, von dem die Laufsohle bildenden Anspritz-(Anschäum-)Material von allen Seiten völlig durchdrungen werden kann, um eine zuverlässige dauerhafte wasserdichte Versiegelung des auch durch die Bänder verlaufenden Nahtmaterials zu erreichen, sind die Bänder vorzugsweise als textile, insbesondere gewebte, gewirkte oder geflochtene, Bänder ausgeführt. Darüber hinaus haben sich für die Bänder Multifilamentfäden, insbesondere texturierte Multifilamentfäden, als besonders vorteilhaft erwiesen.

Die Stege werden vorzugsweise aus einem monofilen Faden gebildet, der beispielsweise abwechselnd durch das obere und das untere Band verläuft und in den Bändern eingebunden ist.

Für die Bänder und die Stege, zumindest aber für die Stege, ist ein solches Material zu wählen, welches während des Anspritzens (Anschäumens) der Laufsohle nicht schmilzt und auch keinen wesentlichen Festigkeitsverlust und keine wesentliche Längenänderung erleidet.

Andere geeignete Ausführungsformen der Bänder und/oder der Stege bzw. der daraus bestehenden streifenförmigen Einheit können durch einfache Versuche hergestellt oder - falls schon vorhanden - auf ihre Eigung überprüft werden.

Als für die Bänder und die Stege besonders geeignete Werkstoffe haben sich Polyester, Polypropylen, Polyamid und Polyether erwiesen. Es ist jedoch auch möglich, natürliche Fasern und künstlich hergestellte cellulosische Fasern zu verwenden, sofern die daraus hergestellten Fäden oder Garne eine im wesentlichen glatte Oberfläche (Glattgarne) ohne hervorstehende Fasern aufweisen. Auch der Einsatz von metallischen Fäden (Drähten) ist erfolgversprechend.

Die Stege, zumindest ein Teil derselben, verlaufen vorzugsweise im wesentlichen senkrecht zu den Bändern, um die erforderliche Formstabilität in Querrichtung der streifenförmigen Einheit zu gewährleisten.

Die Herstellung der Fußbekleidung erfolgt beispielsweise in der Weise, daß zunächst das eine, später obere, Band an das verkürzte Obermaterial von innen angenäht wird. Sodann näht man das zweite, untere, Band gemeinsam mit dem Futter an die Brandsohle. Der fertige Schaft wird dann auf den Leisten gezogen und ausgerichtet. Abschließend wird die Laufsohle angespritzt.

### Beispiel (alle Zahlenwerde sind ca.-Werte):

Eine zur Herstellung der wasserdichten Fußbekleidung geeignete streifenförmige Einheit die eine Breite von 10 mm aufwies, bestand aus einem oberen und einem unteren Band, die je eine Breite von 2 mm aufwiesen. Die Stege waren 6 mm lang und hatten einen Durchmesser von 0,1 mm. Der Mittenabstand zweier jeweils benachbarter Stege betrug 1 mm. Die gesamte streifenförmige Einheit war durch ein Wirkverfahren hergestellt worden, bei welchem der die Stege bildende monofile Faden abwechselnd in das eine und das andere Band eingebunden wurde, woraus ein mäanderförmiger Verlauf des monofilen Fadens resultierte. Die Zugfestigkeit des monofilen Fadens aus Polyäthylen 1200 dtex und damit der Stege betrug 49 N. Die Bänder waren aus texturierten PES 400 dtex f72 Fäden hergestellt, die eine Zugfestigkeit von 8 N aufwiesen.

Alle Abmessungen und Parameter der Fäden, der Stege, der Bänder bzw. der daraus gebildeten streifenförmigen Einheit sind im Rahmen der eingangs genannten Bedingungen frei wählbar und richten sich zudem beispielsweise nach der Art und Größe der wasserdichten Fußbekleidung bzw. nach Zweckmäßigkeits-Gesichtspunkten.

Als geeignet hat sich beispielsweise eine streifenförmige Einheit erwiesen, die von der Firma Bob-Textilwerk, August Bünger, Wuppertal unter der Artikel-Nr. 977 380 bezogen wurde.

Die Erfindung wird nun anhand der Zeichnung näher erläutert. Es zeigt in vereinfachter schematischer Darstellungsweise:
- Figur 1: einen Querschnitt des vorderen Bereichs einer Ausführungsform der wasserdichten Fußbekleidung,
- Figur 1a: einen vergrößerten Ausschnitt aus Figur 1 und
- Figur 2: ein Beispiel für eine streifenförmige Einheit in Draufsicht.

In den Figuren bezeichnen folgende Positionszahlen folgende Teile:
- 1: Innensohle
- 2: Laufsohle
- 3: Schaft
- 4: wasserdichte Schicht
- 5: unterer Randbereich des Schaftes
- 6: oberes Band
- 7: unteres Band
- 8: zugfeste Stege
- 9: äußerer Randbereich der Innensohle
- 10: Aufkantung der Laufsohle
- 11: Einbettungsbereich
- 12: unterer Randbereich der wasserdichten Schicht
- 13: Nahtmaterial (unteres Band)
- 14: Innenraum (Fußraum) der Fußbekleidung
- 15: Nahtmaterial (oberes Band)

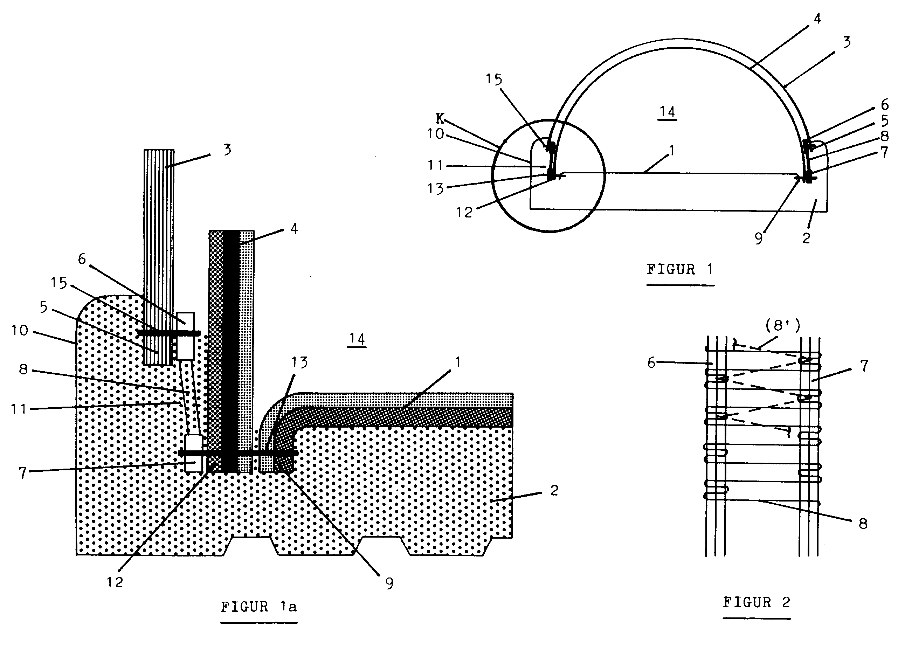

Der in Figur 1 dargestellte Querschnitt des vorderen Teils einer typischen Ausführungsform einer wasserdichten Fußbekleidung, beispielsweise eines Schuhes, und der in Figur 1a dargestellte vergrößerte (im Kreis K der Figur 1 liegende) Ausschnitt zeigen die Innensohle 1, die angespritzte (angeschäumte) feste biegsame Laufsohle 2 mit der Aufkantung 10, den oben offenen Schaft 3, der mit der wasserdichten, jedoch wasserdampfdurchlässigen Schicht 4 gefüttert ist, den unteren Randbereich 5 des Schaftes 3, der mit dem oberen Band 6 vernäht ist, das untere Band 7, das mit dem unteren Randbereich 12 der wasserdichten Schicht 4 und dem äußeren Randbereich 9 der Innensohle 1 vernäht ist, die zugfesten Stege 8, die die beiden Bänder 6 und 7 miteinander verbinden, wodurch eine mittelbare Verbindung des unteren Randbereichs 5 des Schaftes 3 mit dem unteren Randbereich 12 der wasserdichten Schicht 4 und dem äußeren Randbereich 9 der Innensohle 1 hergestellt ist. Wie das die Laufsohle 2 und die Aufkantung 10, also das die Laufsohle 2 und die Aufkantung 10 bildende (Anspritz-)Material, symbolisierende Raster zeigt, reicht das Material bis an die wasserdichte Schicht 4 heran und ist mit dieser durch das Anspritzen (Anschäumen) eine wasserdichte Verbindung eingegangen. Da auch die Stege 8 und das untere Band 7 wie auch das Nahtmaterial 13 in diesem Material völlig eingebettet und damit wasserdicht eingeschlossen sind, kann Wasser, welches durch den Schaft 3 in den Zwischenraum zwischen dem Schaft 3 und der wasserdichten Schicht 4 gelangt ist, nicht in das Innere der wasserdichten Fußbekleidung, also den Fußraum 14, gelangen, da zum einen die Schicht 4 wasserdicht ist und zum anderen das Nahtmaterial 13 und die (nicht dargestellten) Nadeleinstichlöcher durch die Einbettung derart eingekapselt sind, daß das Wasser bis zu ihnen nicht vordringen kann. Eine Einbettung des oberen Bandes 6 und des durch dieses verlaufenden Nahtmaterials 15 ist zwar ebenfalls wünschenswert, für die Wasserdichtheit der Fußbekleidung jedoch nicht unbedingt erforderlich, da an dieser Stelle keine Verbindung zum Innenraum 14 der Fußbekleidung besteht.

In Figur 2 ist in Draufsicht eine aus dem oberen Band 6, dem unteren Band 7 und den zugfesten die beiden Bänder 6; 7 miteinander verbindenden Stegen 8 bestehende streifenförmige im wesentlichen verschiebefeste Einheit dargestellt. Bei dieser Ausführungsform werden die Stege 8 durch ein fadenförmiges Mittel gebildet, das abwechselnd durch oder über die Bänder 6; 7 geführt und mit diesen fest verbunden ist. Die Stege 8 sind im wesentlichen senkrecht zu den Bändern 6; 7, also im wesentlichen senkrecht zu deren Längsachse, angeordnet. Der Verlauf des die Stege 8 bildenden fadenförmigen Mittels ist also im wesentlichen mäanderförmig. Wie durch die gestrichelte Zick-Zack-Linie dargestellt, könnte zusätzlich auch noch ein zweites fadenförmiges Mittel angeordnet sein, welches die Stege (8') bilden würde, die zu der Längsachse der Bänder 6; 7 schräg, also nicht senkrecht, angeordnet wären. Durch die auf diese Weise gebildeten abwechselnd in die eine und in die andere Richtung schräg angeordneten Stege (8') würde die Verschiebefestigkeit der streifenförmigen Einheit noch erhöht. Eine Einheit, die nur schräg verlaufende Stege (8') aufweisen würde, hätte bei zweckentsprechender Ausgestaltung zwar eine ausreichende Zug- und Verschiebefestigkeit, jedoch ggf. keine ausreichende Biegesteifigkeit in Querrichtung, da eine Druckbelastung in Querrichtung der streifenförmigen Einheit eher zu einem Einknicken der schrägen Stege (8') führen würde, als dies bei den senkrecht zu der Längsachse der Bänder 6; 7 angeordneten Stegen 8 der Fall ist.

Die Herstellung der in Figur 2 beispielshalber dargestellten streifenförmigen Einheit kann wie im vorderen Beschreibungsteil ausgeführt erfolgen, jedoch beispielsweise auch in der Weise, daß auf zwei vorgefertigte parallel zueinander angeordnete Bänder, die später die Bänder 6 bzw. 7 bilden, ein fadenförmiges Mittel mäanderförmig, zick-zack-förmig, wellenförmig oder ähnlich aufgelegt und mit den Bändern fest verbunden, also beispielsweise verklebt oder verschweißt, wird. Auch können die Stege 8 durch Aufspritzen einer fließfähigen oder zähflüssigen nach dem Ausspritzen schnell erhärtenden Masse gebildet werden. Hierbei ist es möglich, durch intermittierendes Ausspritzen und Unterbrechen des Ausspritzens nur die Stege selbst zu bilden, vergleichbar mit den Sprossen einer Leiter.

Auch ist die Herstellung der streifenförmigen verschiebefesten Einheit aus einem Materialstreifen, der alle sonstigen Forderungen erfüllt, durch Ausstanzen der Freiräume, die von je zwei Stegen 8, einem Abschnitt des Bandes 6 und einem Abschnitt des Bandes 7 umschlossen sind, möglich. Auf diese Weise ist es auch möglich, nicht rechteckige, also beispielsweise runde oder ovale Freiräume auszustanzen, was zu Stegen 8 führt, die nicht einen über ihre Länge gleichbleibenden Querschnitt aufweisen.

Wichtig für die aus den drei Elementen 6; 7; 8 gebildete streifenförmige verschiebefeste Einheit ist, daß der mittlere, durch die Stege 8 gebildete Bereich eine wesentlich geringere Materialdichte aufweist als die Bänder 6 bzw. 7 und daß die Bänder 6 und 7 möglichst schmal sind, weil hierdurch eine weitestgehend faltenfreie Verarbeitung der Einheit auch bei kleinen Krümmungsradien erreicht wird.

Ein erfindungswesentliches Merkmal bei allen Ausführungsformen der für die erfindungsgemäße wasserdichte Fußbekleidung geeigneten streifenförmigen Einheit ist, daß - in Draufsicht betrachtet - die Projektionsfläche der Freiräume zwischen den Stegen - ggf. wesentlich - größer ist als die Projektionsfläche der Stege.

## Patentansprüche

1. Wasserdichte Fußbekleidung aufweisend eine Innensohle (1), eine angespritzte bzw. angeschäumte feste biegsame Laufsohle (2) mit einer Aufkantung (10) sowie einen oben offenen Schaft (3), der mit einer wasserdichten, jedoch wasserdampfdurchlässigen Schicht (4) gefüttert ist, wobei der untere Randbereich (5) des Schaftes (3) mit dem unteren Randbereich (12) der Schicht (4) und dem äußeren Randbereich (9) der Innensohle (1) über ein oberes Band (6), ein unteres Band (7) und eine Vielzahl von die beiden Bänder (6; 7) miteinander verbindenden zugfesten Stegen (8) verbunden ist und wobei die Bänder (6; 7) und die Stege (8) eine im wesentlichen verschiebefeste Einheit bilden, wobei der untere Randbereich (5) des Schaftes (3) mit dem oberen Band (6) vernäht ist und der untere Randbereich (12) der Schicht (4) und der äußere Randbereich (9) der Innensohle (1) mit dem unteren Band (7) vernäht sind, die Stege (8) und das untere Band (7) in dem die Laufsohle (2) bildenden Material eingebettet sind und dieses Material in diesem Einbettungsbereich (11) mit der Schicht (4) durch das Anspritzen bzw. Anschäumen wasserdicht verbunden ist.

2. Fußbekleidung nach Anspruch 1, dadurch gekennzeichnet, daß die Stege (8) biegesteif ausgebildet sind.

3. Fußbekleidung nach Anspruch 1 oder 2, dadurch gekennzeichnet, daß die Stege (8) durch ein monofiles Mittel gebildet werden.

4. Fußbekleidung nach Anspruch 3, dadurch gekennzeichnet, daß das monofile Mittel abwechselnd durch das obere Band (6) und das untere Band (7) geführt ist und in den Bändern (6; 7) eingebunden ist.

5. Fußbekleidung nach wenigstens einem der Ansprüche 1 bis 4, dadurch gekennzeichnet, daß die Stege (8) im wesentlichen senkrecht zu den Bändern (6; 7) angeordnet sind.

6. Fußbekleidung nach wenigstens einem der Ansprüche 1 bis 5, dadurch gekennzeichnet, daß das untere Band (7) als textiles z.B. gewebtes, gewirktes, geflochtenes Band ausgebildet ist.

7. Fußbekleidung nach wenigstens einem der Ansprüche 1 bis 6, dadurch gekennzeichnet, daß das obere Band (6) als textiles z.B. gewebtes, gewirktes, geflochtenes Band ausgebildet ist.

8. Fußbekleidung nach wenigstens einem der Ansprüche 1 bis 7, dadurch gekennzeichnet, daß das obere Band (6) und/oder das untere Band (7) durch wenigstens einen Multifilamentfaden gebildet wird.

9. Fußbekleidung nach Anspruch 8, dadurch gekennzeichnet, daß das obere Band (6) und/oder das untere Band (7) durch wenigstens einen texturierten Faden gebildet wird.

## Claims

1. Waterproof footwear comprising an inner sole (1), an extruded or expanded, strong, flexible outer sole (2) with a turned-up edge (10) as well as an upwardly open upper (3), which is lined with a waterproof but water vapour-permeable layer (4), wherein the bottom edge region (5) of the upper (3) is connected to the bottom edge region (12) of the layer (4) and to the outer edge region (9) of the inner sole (1) by a top band (6), a bottom band (7) and a plurality of extension-resistant straps (8), which connect the two bands (6; 7) to one another, and wherein the bands (6; 7) and the straps (8) form a substantially slide-resistant unit, wherein the bottom edge region (5) of the upper (3) is stitched to the top band (6), and the bottom edge region (12) of the layer (4) and the outer edge region (9) of the inner sole (1) are stitched to the bottom band (7), the straps (8) and the bottom band (7) are embedded in the material forming the outer sole (2) and said material in said embedding region (11) is bonded by the extrusion or expansion process in a waterproof manner to the layer (4).

2. Footwear according to claim 1, characterized in that the straps (8) are flexurally stiff.

3. Footwear according to claim 1 or 2, characterized in that the straps (8) are formed by a monofilament means.

4. Footwear according to claim 3, characterized in that the monofilament means is guided alternately through the top band (6) and the bottom band (7) and is integrated in the bands (6; 7).

5. Footwear according to at least one of claims 1 to 4, characterized in that the straps (8) are disposed substantially at right angles to the bands (6; 7).

6. Footwear according to at least one of claims 1 to 5, characterized in that the bottom band (7) takes the form of a textile - e.g. woven, knitted, braided - band.

7. Footwear according to at least one of claims 1 to 6, characterized in that the top band (6) takes the form of a textile - e.g. woven, knitted, braided - band.

8. Footwear according to at least one of claims 1 to 7, characterized in that the top band (6) and/or the bottom band (7) is formed by at least one multifilament yarn.

9. Footwear according to claim 8, characterized in that the top band (6) and/or the bottom band (7) is formed by at least one textured yarn.

## Revendications

1. Article chaussant étanche à l'eau comportant une semelle intérieure (1), une semelle de marche (2) fixe, flexible, liée par moulage-injection ou par moulage-expansion, avec un bord (10) montant, ainsi qu'une tige (3) ouverte en haut qui est doublée d'une couche (4) étanche à l'eau mais perméable à la vapeur d'eau, la région (5) du bord inférieur de la tige (3) étant liée à la région (12) de la couche (4) et à la région (9) du bord extérieur de la semelle intérieure (1) par l'intermédiaire d'une bande (6) supérieure, d'une bande (7) inférieure et de plusieurs entretoises (8) résistantes à la traction qui relient entre elles les bandes (6; 7), les bandes (6; 7) et les entretoises (8) formant un ensemble essentiellement rigide en translation, la région (5) du bord inférieur de la tige (3) étant cousue à la bande (6) supérieure et la région (12) du bord inférieur de la couche (4) ainsi que la région (9) du bord extérieur de la semelle intérieure (1) étant cousue à la bande (7) inférieure, les entretoises (8) et la bande (7) inférieure étant noyées dans le matériau constituant la semelle de marche (2) et ledit matériau étant lié de manière étanche à l'eau par moulage-injection ou par moulage-extrusion à la couche (4) dans la région (11) de surmoulage.

2. Article chaussant selon la revendication 1, caractérisé par le fait que les entretoises (8) sont rigides en flexion.

3. Article chaussant selon la revendication 1 ou 2, caractérisé par le fait que les entretoises (8) sont formées d'un produit monofilament.

4. Article chaussant selon la revendication 3, caractérisé par le fait que le produit monofilament passe alternativement à travers la bande (6) supérieure et la bande (7) inférieure et est lié aux bandes (6; 7).

5. Article chaussant selon au moins une des revendications 1 à 4, caractérisé par le fait que les entretoises (8) sont disposées essentiellement perpendiculairement aux bandes (6; 7).

6. Article chaussant selon au moins une des revendications 1 à 5, caractérisé par le fait que la bande (7) inférieure est réalisée sous la forme d'une bande textile, par exemple tissée, tricotée ou entrelacée.

7. Article chaussant selon au moins une des revendications 1 à 6, caractérisé par le fait que la bande (6) supérieure est réalisée sous la forme d'une bande textile, par exemple tissée, tricotée ou entrelacée.

8. Article chaussant selon au moins une des revendications 1 à 7, caractérisé par le fe fait que la bande (6) supérieure et/ou la bande (7) inférieure est/sont formée(s) par au moins un fil multi-filaments.

9. Article chaussant selon la revendication 8, caractérisé par le fe fait que la bande (6) supérieure et/ou la bande (7) inférieure est/sont formée(s) par au moins un fil texturé.
